(19) Europäisches Patentamt

European Patent Office

Office européen des brevets

(11) **EP 0 607 850 B1**

(12) **EUROPÄISCHE PATENTSCHRIFT**

(45) Veröffentlichungstag und Bekanntmachung des Hinweises auf die Patenterteilung:
**27.08.1997 Patentblatt 1997/35**

(51) Int Cl.6: **G01C 19/28**

(21) Anmeldenummer: **94100330.3**

(22) Anmeldetag: **12.01.1994**

(54) **Mess- und Übertragungssystem für Lagekreisel**

Measuring and transmission system for attitude gyroscope

Système de mesure et de transmission pour gyroscope d'attitude

(84) Benannte Vertragsstaaten:
**DE FR GB**

(30) Priorität: **16.01.1993 DE 4301040**

(43) Veröffentlichungstag der Anmeldung:
**27.07.1994 Patentblatt 1994/30**

(73) Patentinhaber: **Daimler-Benz Aerospace Aktiengesellschaft**
**81663 München (DE)**

(72) Erfinder:
• **Hofmann, Fritz, Dipl.-Ing.**
  **D-81739 München (DE)**
• **Gruber, Ernst**
  **D-81735 München (DE)**

(56) Entgegenhaltungen:
EP-A- 0 207 907     FR-A- 2 608 754
US-A- 3 509 779     US-A- 3 771 085

**Beschreibung**

Die Erfindung bezieht sich auf ein Meß- und Übertragungssystem von Meßsignalen für die Auslenkung des Innenrahmenwinkels eines Lagekreisels gemäß dem Oberbegriff des Anspruchs 1.

Solche Systeme sind an sich bekannt, wobei der prinzipielle Aufbau einer kardanischen Aufhängung eines Lagekreisels beim Stand der Technik vorsieht, daß ein Abgriffsystem im Innenrahmen angeordnet wird, welches den Innenrahmenwinkel α mißt. Die Energieversorgung für dieses Abgriffsystem und das gewonnene Meßsignal für den Innenrahmenwinkel α müssen hierbei über die Aufhängung des Außenrahmens am äußeren Gehäuse auf dieses äußere Gehäuse übertragen werden, beispielsweise durch einen Schleifringsatz mit mindestans drei Kanälen - beispielsweise für die Energiezuleitung, das Meßsignal und die Rückleitung -. Die Anforderungen an ein derartiges Meß- und Übergungssystem sind naturgemäß hoch und verlangen einmal das Vermeiden von Reibungs- oder sonstigen Reaktionskräfte in der Kardanaufhängung und zum andern eine hohe Störfestigkeit und Beständigkeit gegen Alterung. Hierbei soll natürlich der gesamte Aufbau einfach sein und nur geringe Stückkosten haben und auch keine systembedingte Grobquantisierung wie zum Beispiel On/off-Charakteristik des Meßsignals für den Innenrahmenwinkel. Weiterhin muß ein umfassender Meßbereich für den Innenrahmenwinkel α gegeben sein und eine kontinuierliche Verfügbarkeit des Innenrahmenwinkel-Meßsignals in jeder beliebigen Stellung des Außenrahmenwinkels φ.

Die Erfüllung all dieser Forderungen - insbesondere der erstgenannten - ist sehr schwer zu realisieren, weil zum einen kontaktbehaftete Präzisionsschleifringe sehr teuer sind und trotzdem ein Reibungsmoment nicht vermeiden können, außerdem sind sie im Stillstand sehr empfindlich gegen Alterung. Besonders nachteilig aber ist, daß das erzeugte Reibungsmoment eine absolut unerwünschte Kreiseldrift K (= Reibungsmoment/Drall des Rotors) hervorruft. Andererseits erfordern sie - bei Verwendung von kontaktfreien Übertragern - eine aufwendige Einbaugeometrie und eine ebenso aufwendige Elektronik.

Um Schleifringe nicht mehr verwenden zu müssen, kann man zwar das Abgriffsystem am Innenrahmen durch zwei andere Funktionsgruppen ersetzen, beispielsweise durch den Signalgeber am Innenrahmen und den Signalempfänger am äußeren Gehäuse. Da aber hierbei der Schleifringsatz nicht vollständig eliminiert wird, denn es bleibt beispielsweise die Energieversorgung für den Signalgeber, sind die oben genannten Nachteile nicht - wie erforderlich - zu beseitigen und es können neue Komplikationen bezüglich der Einbaugeometrie, der Funktion bei verschiedenen Außenrahmenwinkel b, sowie Signalabschattungen hinzukommen.

Durch die EP-A-0 207 907 ist ein Meß- und Übertragungssystem von Meßsignalen für die Auslenkung des Innenrahmenwinkels eines kardanisch aufgehängten Lagekreisels bekannt geworden, bei dem der Signalgeber des Innenrahmens in Form einer im Kreiselrotor angeordneten Primärspule ausgebildet ist und der Signalempfänger am Außenrahmen von mehreren Meßspulen gebildet wird, wobei die Signalauswertung in einer nachgeschalteten Einheit durchgeführt wird. Auch für diese Einrichtung treffen die vorgenannten Probleme zu.

Eine ähnliche Einrichtung ist aus der US 3, 509,779 bekannt, die ebenfalls die angesprochenen Probleme nicht lösen kann und eine aufwendige Einbaugeometrie erfordern.

Es sind schon Versuche gemacht worden, Abgriffsysteme mit passiven Funktionsgruppen am Innenrahmen zu realisieren und man hat hierbei optische Reflektoren eingesetzt. Diese haben jedoch wegen ihrer komplexen Einbaugeometrie nur einen sehr engen Funktionsbereich.

Der Erfindung liegt die Aufgabe zugrunde ein Meß- und Übertragungssystem der eingangs genannten Art zu schaffen, das schleifringlos arbeitet und in der Kardanaufhängung keinerlei störende Reaktionskräfte hervorruft sowie die Nachteile des Standes der Technik beseitigt. In den Unteransprüchen sind Ausgestaltungen und Weiterbildungen angegeben und in der nachfolgenden Beschreibung sind Ausführungsbeispiele erläutert und in den Figuren der Zeichnung so dargestellt, daß diese die Erläuterungen ergänzen. Es zeigen:

Fig. 1    eine perspektivische Darstellung eines Ausführungsbeispiels mit einem Permanentmagnet im Kreiselrotor und mehreren Meßspulen im Außenrahmen,

Fig. 2    ein Schaltbild für die Basisschaltung zur Auswertung der Meßspannungen eines Spulenpaares gemäß Fig. 1,

Fig. 3    ein Schemabild für die Anordnung von vier spiralförmigen Spulen mit untereinander parallelen Meßachsen,

Fig. 4    eine perspektivische Darstellung eines Meßsystems nach dem Stand der Technik mit kardanischer Aufhängung des Lagekreisels und Abgriff des Innenrahmenwinkels α.

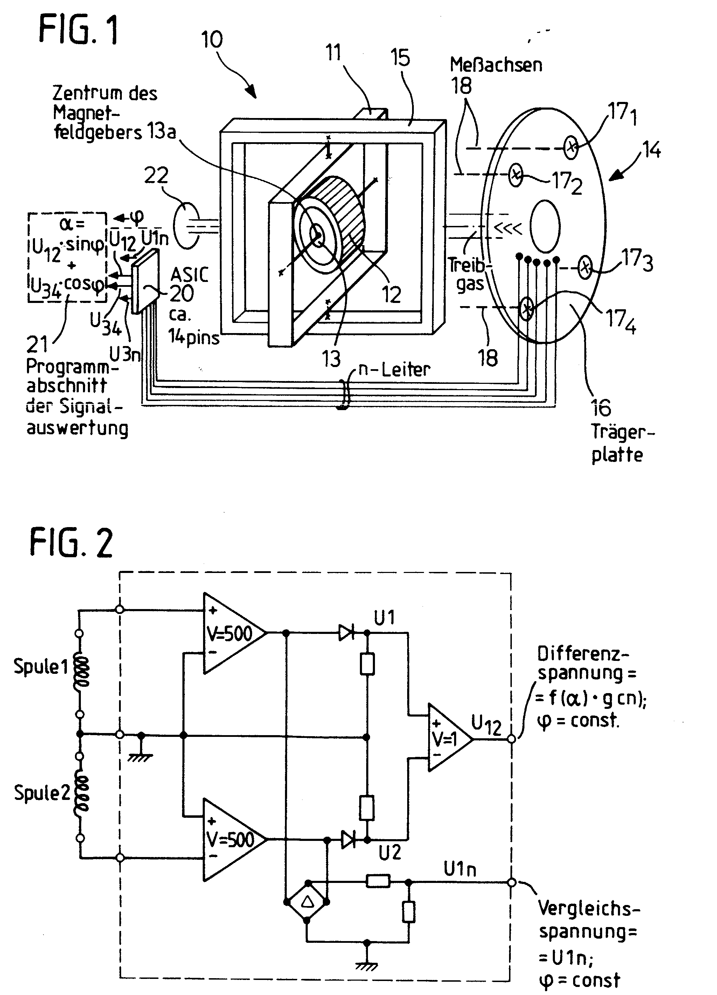

Bei dem in Fig. 1 dargestellten Ausführungsbeispiel eines Meß- und Übertragungssystems zur Erfassung des Innenrahmenwinkels wird der Signalgeber am Innenrahmen 11 in Form eines im Kreiselrotor 12 montierten Permanentmagneten 13 vorgesehen. Nach Start des Rotors 12, beispielsweise durch Treibgas oder durch eine Feder, erzeugt der Magnet 13 ein kräftig pulsierendes Magnetfeld als Signalgeber und benötigt hierbei keine Energiezufuhr über Schleifringe. Wie die Fig. 1 verdeutlicht, sind mehrere Meßspulen 17 als sogenannte Signalempfänger am Außenrahmen 15 angeordnet, die vorzugsweise auf einer Trägerplatte 14 so untergebracht sind, daß die Meßachsen 18 untereinander parallel und exzentrisch zum Zentrum des Magnetfeldgebers 13 ausgerichtet sind.

Das so ausgebildete System zeichnet sich durch seinen einfachen und für große Stückzahlen geeigneten Aufbau aus, und ist wegen des relativ hohen Signalpegels und wegen der Wechselmodulation des Meßsignals sehr störunempfindlich, insbesondere gegenüber niederfrequenten Störungen und Nullpunktverschiebungen der Komponentenparameter.

Die Fig. 2 zeigt vereinfacht für einen konstanten Außenrahmenwinkel $\varphi$ ein Ausführungsbeispiel für die Auswertung des Meßsignals zweier einander gegenüberliegender Meßspulen $17_1$, $17_2$ im nachgeschalteten ASIC 20. Das hier vorgeschlagene Prinzip, nämlich die Meßspannungen erst gleichrichten und dann subtrahieren, erspart den Aufwand eines phasenempfindlichen Demodulators. Die Meßspannungen der Spulen $17_1$, $17_2$ werden zunächst separat verstärkt, dann gleichgerichtet und anschließend voneinander abgezogen. Daraus ergibt sich nun die Differenzspannung $u_{1.2}$ als Funktion des Innenrahmenwinkels $\alpha$, sowie der Rotordrehzahl n (der Außenrahmenwinkel wird in diesem Beispiel als konstant vorgegeben). Hierbei ist der Nullpunkt der Differenzspannung weitgehend drehzahlunabhängig und die Empfindlichkeit der Meßcharakteristik ist mit dem Faktor $g_{(n)}$ drehzahlabhängig. Die aus der Summe der Spulenspannungen gebildete Vergleichsspannung erlaubt aber in der weiteren Signalverarbeitung eine rechnerische Kompensation des Drehzahleinflusses.

Um bei jedem beliebigen Außenrahmenwinkel $\varphi$ den Innenrahmenwinkel zu finden, werden zwei Spulenpaare $17_3$, $17_4$ verwendet. Der Innenrahmenwinkel wird hierbei durch Multiplikation mit dem "sinus" oder "cosinus" des Außenrahmenwinkels errechnet (Achstransformation). Das hierfür benötigte Signal für den Außenrahmenwinkel $\varphi$ kann durch irgendeines der bekannten Abgriffsysteme gewonnen werden. Schleifringe sind auch hier nicht erforderlich, weil sich das betreffende Abgriffsystem direkt am Außenrahmen abstützt. Somit ergibt sich beispielsweise bei vier Meßspulen (wie dargestellt) und ohne Berücksichtigung der oben beschriebenen Drehzahlkompensation:

$$u_1, u_2, u_3, u_4 = \text{gleichgerichtete Spulenspannungen}$$

$$u_{1,2} = u_1 - u_2, u_{3,4} = u_3 - u_4 = -\text{ Differenzspannungen}$$

$$u_x = u_{1,2} * \cos \varphi + u_{3,4} * \sin \varphi = \text{Achstransformation,}$$

wobei $u_x$ das Maß für den Innenrahmenwinkel $\alpha$ ist.

Als Schnittstellen für eine eventuelle Digitalisierung der Meßsignale zur weiteren Signalverarbeitung bieten sich alternativ jeweils vier Analog/Digital-Wandlerkanäle an. Marktgängige Einchip-Mikrokontroller mit vier niederfrequenten A/D-Wandlerkanälen sind problemlos einsetzbar. In dem Ausführungsbeispiel gemäß Fig. 1 sind beispielsweise vorgesehen:

ein ASIC-Chip für die Signalverstärkung, Gleichrichtung, Differenzspannungen und Vergleichsspannnungen;

ein Programmabschnitt in der nachgeschalteten digitalen Signalauswertung des Anwendersystems.

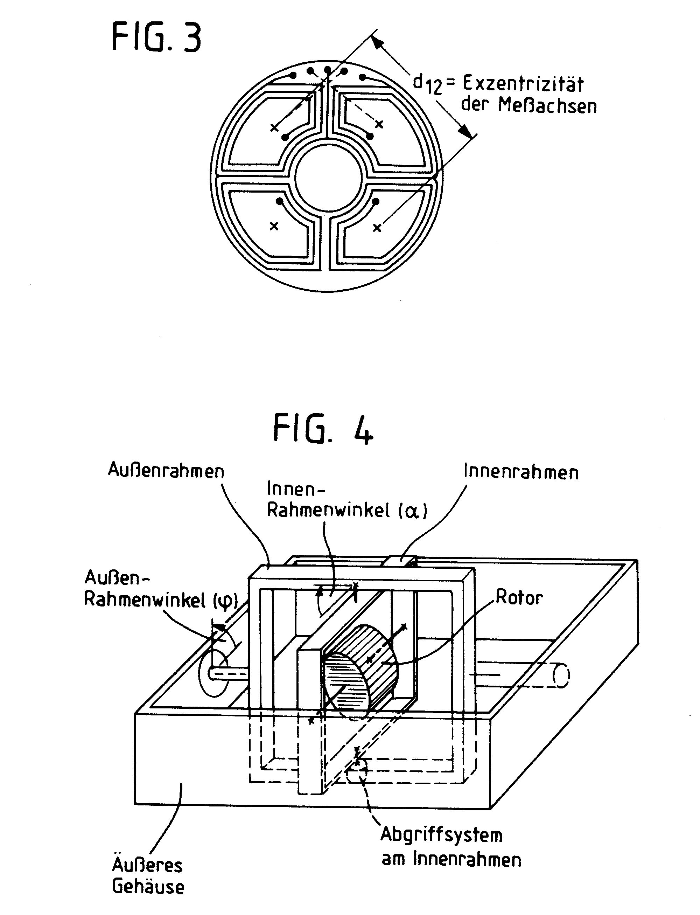

Die Fig. 3 zeigt ein Realisierungsbeispiel für die in Fig. 1 gezeigte Spulenanordnung, bei der vier Spulen auf einem gemeinsamen Träger vorgesehen sind.

## Patentansprüche

1. Meß- und Übertragungssystem von Meßsignalen für die Auslenkung des Innenrahmenwinkels eines in einem Gehäuse kardanisch aufgehängten Lagekreisels, wobei der Signalgeber des Innenrahmens in Form eines im Kreiselrotor angeordneten Permanentmagneten ausgebildet ist und der Signalempfänger am Außenrahmen von mehreren Meßspulen gebildet wird und wobei die Meßsignalauswertung in einer nachgeschalteten Einheit erfolgt, **dadurch gekennzeichnet**, daß der Signalgeber als zylinderförmiger Permanentmagnet (13) in der Achse des Kreiselrotors (12) liegt und die Meßspulen (17) des Signalempfängers (14) auf einer gemeinsamen Trägerplatte (16) so angeordnet sind, daß ihre Meßachsen (18) untereinander parallel, jedoch zum Magnetfeldzentrum (13a) exzentrisch ausgerichtet sind

2. System nach Anspruch 1, **dadurch gekennzeichnet,** daß zur Auswertung der Meßsignale, deren gemessene Spannungen einzeln verstärkt, dann gleichgerichtet und anschließend voneinander abgezogen werden.

3. System nach Anspruch 1 oder 2, **dadurch gekennzeichnet,** daß die einzelnen verstärkten Spannungen zusätzlich summiert werden und das Summensignal zur Kompensation des Drehzahleinflusses verwendet wird.

4. System nach den Ansprüchen 1 bis 3, **dadurch gekennzeichnet,** daß das Signal für den Außenrahmenwinkel ($\varphi$) durch ein Abgriffsystem (22) gewonnen wird, das sich direkt am Außenrahmen (15) abstützt.

5. System nach den Ansprüchen 1 bis 4, **dadurch gekennzeichnet,** daß als Schnittstellen zur Digitalisierung der Meßsignale die Rechnerelektronik der Signalverarbeitungseinheit (20) jeweils vier A/D-Wandlerkanäle aufweist.

6.  System nach den Ansprüchen 1 bis 5, **dadurch gekennzeichnet**, daß vier spiralförmige Meßspulen (17) mit zueinander parallelen Achsen (18) auf einer am Außenrahmen (15) befestigten Trägerplatte (16) angeordnet sind.

## Claims

1.  Measuring and transmission system for measuring signals for deflection of an internal frame angle of an attitude gyro which is cardanically suspended in a housing, in which the signal transmitter of the internal frame is arranged in the form of a permanent magnet positioned in a gyro rotor and the signal receiver is formed on the external frame by a plurality of measuring coils and wherein signal evaluation is performed in a downstream unit, **characterised in that** the signal transmitter lies as a cylindrical permanent magnet (13) in the axis of the rotary gyro (12), and the measuring coils (17) of the signal receiver (14) are arranged on a common support plate (16) in such a manner that their measuring axes (18) are aligned parallel to each other but eccentrically to the magnetic field centre (13a).

2.  System according to Claim 1, **characterised in that**, for the purpose of evaluation of the measuring signals, their measured currents are individually amplified, then rectified and thereafter subtracted from each other.

3.  System according to Claim 1 or 2, **characterised in that** the individually amplified currents are additionally summed, and the sum signal is used to compensate the torque influence.

4.  System according to Claims 1 to 3, **characterised in that** the signal for the external frame angle ($\phi$) is obtained by means of a pickoff system (22) which supports itself directly on the external frame (15).

5.  System according to Claims 1 to 4, **characterised in that** the computer electronics of the signal processing unit (20) comprises four respective A/D converter channels as intersecting points for digitalisation of the measuring signals.

6.  System according to Claims 1 to 5, **characterised in that** four spiralshaped measuring coils (17) with axes (18) parallel thereto are arranged on a support plate (16) which is mounted on the external frame (15).

## Revendications

1.  Système de mesure et de transmission de signaux de mesure pour la variation de l'angle de l'anneau intérieur d'un gyroscope d'attitude suspendu par cardan dans un boîtier, le capteur de signal de l'anneau intérieur étant agencé sous la forme d'un aimant permanent disposé dans le rotor du gyroscope et le récepteur de signal étant formé par plusieurs bobines de mesure disposées sur l'anneau extérieur et le traitement des signaux de mesure ayant lieu dans une unité placée en aval, caractérisé par le fait que le capteur de signal est disposé en tant qu'aimant permanent (13) cylindrique sur l'axe du rotor (12) du gyroscope et que les bobines de mesure (17) du récepteur de signal (14) sont disposées sur une plaque support (16) commune, de telle sorte que leurs axes de mesure (18) soient parallèles entre eux mais soient excentrés par rapport au centre (13a) du champ magnétique.

2.  Système selon la revendication 1, caractérisé par le fait que pour le traitement des signaux de mesure, on amplifie séparément leurs tensions mesurées, on les redresse et on les soustrait les unes des autres.

3.  Système selon la revendication 1 ou 2, caractérisé par le fait que l'on additionne en outre les différentes tensions amplifiées et que l'on utilise le signal global pour compenser l'influence de la vitesse de rotation.

4.  Système selon les revendications 1 à 3, caractérisé par le fait que l'on obtient le signal pour l'angle ($\varphi$) d'anneau extérieur à l'aide d'un système de lecture (22) qui prend directement appui sur l'anneau extérieur (15).

5.  Système selon les revendications 1 à 4, caractérisé par le fait que l'électronique de calcul de l'unité de traitement de signal (20) comporte chaque fois, comme interface pour la numérisation des signaux de mesure, quatre canaux convertisseurs analogique/numérique.

6.  Système selon les revendications 1 à 5, caractérisé par le fait que quatre bobines de mesure (17) avec des axes (18) mutuellement parallèles sont disposées sur une plaque support (16) fixée à l'anneau extérieur (15).

# FIG. 1

# FIG. 2

# FIG. 3

$d_{12}$ = Exzentrizität
der Meßachsen

# FIG. 4

Außenrahmen

Innen-
Rahmenwinkel ($\alpha$)

Innenrahmen

Außen-
Rahmenwinkel ($\varphi$)

Rotor

Abgriffsystem
am Innenrahmen

Äußeres
Gehäuse

6